# EUROPEAN PATENT APPLICATION

(11) **EP 4 663 346 A1**
(43) Date of publication of application: **17.12.2025**
(21) Application number: 24219544.4
(22) Date of filing: 12.12.2024
(51) Int. Cl.: B25B 5/02, B25B 5/10, B25B 5/14, B25B 5/16

(54) **WHEEL HUB CLAMPING APPARATUS AND DETECTION DEVICE**

(30) Priority: 11.06.2024 CN 202421322834 U
(71) Applicant: Shenzhen Smartsafe Tech Co., Ltd., Shenzhen, Guangdong 518000 (CN)
(72) Inventor: Zhan, Wei, Shenzhen, 518000 (CN); Wang, Qingwei, Shenzhen, 518000 (CN); Wu, Haifan, Shenzhen, 518000 (CN); Gu, Shaoli, Shenzhen, 518000 (CN)
(74) Representative: Potter Clarkson

(57) **Abstract**

A wheel hub clamping apparatus and a detection device are provided. The wheel hub clamping apparatus includes: two clamping jaw assemblies, which are configured to clamp on a wheel hub; a guide assembly, which is slidably connected with the two clamping jaw assemblies to enable the two clamping jaw assemblies to move relative to the guide assembly; a driving assembly, which is in transmission connection with the two clamping jaw assemblies and is used to drive the two clamping jaw assemblies to move toward or away from each other on the guide assembly to reach target positions; and a fixing assembly, which is arranged on the guide assembly and is located between the two clamping jaw assemblies, and is used to fix an auxiliary calibration tool. By adopting the above technical solution, the driving assembly can adjust the positions of the two clamping jaw assemblies on the guide assembly to enable the two clamping jaw assemblies to clamp the wheel hub, the operation is convenient. In addition, the distance between the two clamping jaw assemblies is adjustable, so that the wheel hub clamping apparatus can adapt to wheels of different sizes, thereby improving the applicability of the wheel hub clamping apparatus.

## Description

### TECHNICAL FIELD

The present application relates to the technical field of automobile technology, more particularly to a wheel hub clamping apparatus and a detection device.

### BACKGROUND

With the development of science and technology and economy in China, the number of vehicles owned by residents is growing rapidly, and the detection technology for vehicles is also developing continuously. As an important part of vehicle detection, the detection of vehicle wheel alignment parameters has a significant impact on the safety of the whole vehicle. If the wheel alignment parameters are abnormal, it will lead to a series of economic and safety issues such as abnormal wear of vehicle tires, driving deviation, wheel shimmy, heavy steering, increased fuel consumption, and the like, which directly affect the driving safety and daily use of the vehicle.

At present, when the detection device on the market performs four-wheel alignment detection operations, it is necessary to provide a target on the tire hub, and obtain the positioning information of the tire by obtaining the information of the target. However, the existing target disassembling and assembling is inconvenient, resulting in low operating efficiency of the operator.

### SUMMARY

It is an objective of the present application to provide a wheel hub clamping apparatus and a detection device, so as to solve the technical problems of low operating efficiency caused by the inconvenience in target disassembling and assembling in the prior art.

To achieve the above purpose, the technical solutions adopted by the present application are as follows:

In a first aspect, a wheel hub clamping apparatus is provided. The wheel hub clamping apparatus comprises: two clamping jaw assemblies, which are configured to clamp on a wheel hub; a guide assembly, which is slidably connected with the two clamping jaw assemblies to enable the two clamping jaw assemblies to move relative to the guide assembly; a driving assembly, which is in transmission connection with the two clamping jaw assemblies and is used to drive the two clamping jaw assemblies to move toward or away from each other on the guide assembly to reach target positions; and a fixing assembly, which is arranged on the guide assembly and is located between the two clamping jaw assemblies, and is used to fix an auxiliary calibration tool.

By adopting the above technical solution, the driving assembly can adjust the positions of the two clamping jaw assemblies on the guide assembly to enable the two clamping jaw assemblies to clamp the wheel hub, the operation is convenient. In addition, the distance between the two clamping jaw assemblies is adjustable, so that the wheel hub clamping apparatus can adapt to wheels of different sizes, thereby improving the applicability of the wheel hub clamping apparatus.

In an embodiment, the guide assembly defines therein a guide cavity, the driving assembly is arranged in the guide cavity, and the two clamping jaw assemblies extend into the guide cavity and are in transmission connection with the driving assembly.

By adopting the above technical solution, the guide assembly and the driving assembly are highly integrated, the occupied space and volume are reduced, and the wheel hub clamping apparatus is miniaturized.

In an embodiment, the guide assembly comprises: a guide cylinder, and a guide cavity defined in the guide cylinder. The driving assembly comprises a threaded shaft, and the threaded shaft is arranged through the guide cavity and is in transmission connection with the two clamping jaw assemblies. The threaded shaft is configured to drive the two clamping jaw assemblies to move along an axial direction of the threaded shaft when the threaded shaft rotates around an axis of the threaded shaft.

By adopting the above technical solution, the rotation of the threaded shaft around the axis can drive the clamping jaw assemblies to move along the axial direction of the threaded shaft, that is, the threaded shaft is connected to the clamping jaw assemblies by a threaded manner, which has high transmission reliability and improves the adjustment flexibility.

In an embodiment, the guide assembly further comprises a guide structure arranged on an outer wall of the guide cylinder, a length direction of the guide structure is parallel to an axial direction of the guide cylinder, the guide cylinder and the guide structure are both in slidable connection with the two clamping jaw assemblies, and the guide structure is configured to limit rotation of the two clamping jaw assemblies around an axis of the guide cylinder.

By adopting the above technical solution, the guiding function of the guide structure is realized.

In an embodiment, the guide assembly further comprises a scale structure arranged on an outer wall of the guide cylinder, and the scale structure is configured to calibrate positions of the two clamping jaw assemblies on the guide assembly.

By adopting the above technical solution, the convenience of using the wheel hub clamping apparatus is improved.

In an embodiment, each of the two clamping jaw assemblies comprises: a slide part, a connecting part, and a clamping jaw part. The slide part is sleeved on the threaded shaft, and an inner wall of the slide part is provided with an internal thread matching with the threaded shaft. The connecting part is in connection with the slide part. The slide part defines therein a first guide groove which slidably matches with the guide cylinder. The clamping jaw part is provided at one end of the connecting part away from the slide part and is used to be fixed on the wheel hub.

By adopting the above technical solution, the smoothness of the movements of the clamping jaw assemblies on the guide assembly is improved.

In an embodiment, he slide part further defines therein a second guide groove communicating with the first guide groove, and the second guide groove slidably matches with the guide structure.

By adopting the above technical solution, it is realized that the guide structure restricts the rotation of the clamping jaw assemblies around the axis of the guide cylinder.

In an embodiment, the fixing assembly comprises a first clamping part and a second clamping part fastened to the first clamping part, and the first clamping part and the second clamping part are clamped and fixed on the guide assembly under an action of a fastening force.

By adopting the above technical solution, it is convenient to disassemble and assemble the fixing assembly on the guide assembly.

In an embodiment, the fixing assembly further comprises a fixing part arranged at the first clamping part for detachably connecting with the auxiliary calibration tool, the fixing part defines therein a fixing hole, and the fixing part is further provided with a fastener configured to extend into the fixing hole for fastening the auxiliary calibration tool.

By adopting the above technical solution, the auxiliary calibration tool is detachably fixed on the fixing assembly, which is convenient for the disassembly and assembly of the auxiliary calibration tool.

In a second aspect, a detection device is provided. The detection device comprises an auxiliary calibration tool and the wheel hub clamping apparatus as mentioned in the above. The wheel hub clamping apparatus is configured to fix the auxiliary calibration tool.

By adopting the above technical solution, on the basis of having the advantages of the wheel hub clamping apparatus of the above-mentioned embodiments, the detection device of embodiments of the present application also has the advantage of easy operation.

### BRIEF DESCRIPTION OF THE DRAWINGS

In order to more clearly illustrate the technical solutions in the embodiments of the present application, the drawings required to be configured in the embodiments will be briefly introduced below. Obviously, the drawings described below are only some embodiments of the present application. For ordinary technicians in this field, other drawings can also be obtained based on these drawings without creative work.
FIG. 1 is a three-dimensional structural diagram of a wheel hub clamping apparatus provided in an embodiment of the present application;
FIG. 2 is an exploded view of a wheel hub clamping apparatus provided by an embodiment of the present application from one perspective; and
FIG. 3 is an exploded view of a wheel hub clamping apparatus provided by an embodiment of the present application from another perspective.

In the drawings, the following reference numerals are adopted:
1. clamping jaw assembly; 2. guide assembly; 3. driving assembly;
11. slide part; 12. connecting part; 13. clamping jaw part; 21. guide cavity; 22. guide cylinder; 23. guide structure; 31. threaded shaft; 32. knob; 41. first clamping part; 42. second clamping part; 43. fixing part;
111. first guide groove; 112. second guide groove; 311. first external thread; 312. second external thread; 431. fixing hole; and 432. fastener.

### DETAILED DESCRIPTION OF THE EMBODIMENTS

To clarify the technical problems to be solved by the present application, technical solutions and beneficial effects, the following is a detailed description of the present application in combination with the accompanying drawings and embodiments. It should be understood that the specific embodiments described here are only configured to explain the present application and are not configured to limit the present application.

It should be noted that when an element is described as "fixed" or "arranged" on/at another element, it means that the element can be directly or indirectly fixed or arranged on/at another element. When an element is described as "connected" to/with another element, it means that the element can be directly or indirectly connected to/with another element.

It should be understood that the terms "length", "width", "upper", "lower", "front", "back", "left", "right", "vertical", "horizontal", "top", "bottom", "inside", "outside" and the like indicate positions or positional relationships based on the positions or positional relationships shown in the drawings, and are only for the convenience of describing the present application, rather than indicating that the device or element must have a specific orientation, be constructed and operated in a specific orientation, and therefore cannot be understood as a limitation on the present application.

In addition, the terms "first" and "second" are configured for descriptive purposes only and cannot be understood as indicating relative importance or indicating the number of technical features. In the description of the present application, "multiple" means two or more, unless otherwise clearly and specifically defined. The following is a more detailed description of the specific implementation of the present application in conjunction with specific embodiments.

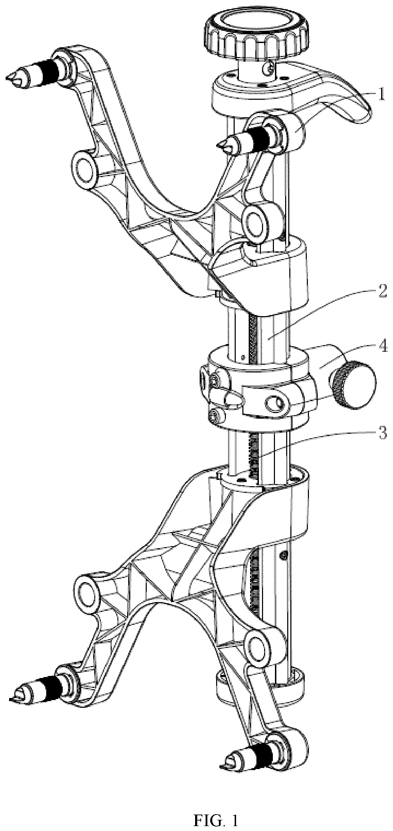

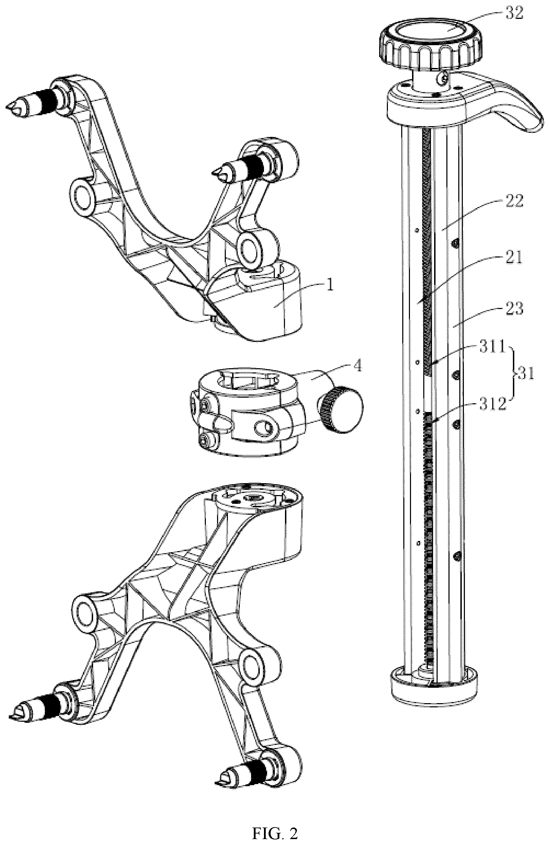

As shown in FIGS. 1 and 2, a wheel hub clamping apparatus provided by embodiments of the present application is used in the operation of vehicle four-wheel alignment detection. For example, the four-wheel aligner comprises a detection device and a detection apparatus. The detection device comprises a wheel hub clamping apparatus and an auxiliary calibration tool. The auxiliary calibration tool (such as a target) is used to be fixed on the wheel hub clamping apparatus, and the wheel hub clamping apparatus is used to be fixed on the wheel hub in a clamping manner, and then the information of the auxiliary calibration tool is obtained through the detection apparatus, thereby obtaining the positioning information of the tire. The wheel hub clamping apparatus of the embodiments is easy to operate, which is helpful for the operator to fix the auxiliary calibration tool on the wheel hub, thereby improving the operating efficiency. The wheel hub clamping apparatus is explained by way of specific embodiments.

The wheel hub clamping apparatus provided by embodiments of the present application comprises: two clamping jaw assemblies 1, which are configured to clamp on a wheel hub; a guide assembly 2, which is slidably connected with the two clamping jaw assemblies 1 to enable the two clamping jaw assemblies 1 to move relative to the guide assembly 2; a driving assembly 3, which is in transmission connection with the two clamping jaw assemblies 1 and is used to drive the two clamping jaw assemblies 1 to move toward or away from each other on the guide assembly 2 to reach target positions; and a fixing assembly 4, which is arranged on the guide assembly 2 and is located between the two clamping jaw assemblies 1, and is used to fix an auxiliary calibration tool.

Here, it can be understood that the clamping jaw assemblies 1 refer to assemblies fixed on the wheel hub in a clamping manner. Two clamping jaw assemblies 1 are provided, and the two clamping jaw assemblies 1 are slidably connected to the guide assembly 2, that is, the clamping jaw assemblies 1 can move relative to the guide assembly 2 on the guide assembly 2, and meanwhile, the two clamping jaw assemblies 1 can move toward or away from each other on the guide assembly 2 to adapt to wheel hubs of different sizes.

The guide assembly 2 refers to an assembly used to guide the clamping jaw assemblies 1 to move along preset directions. The guide assembly 2 is used to be slidably connected to the clamping jaw assemblies 1, so that the clamping jaw assemblies 1 can move relative to the guide assembly 2 on the guide assembly 2. In an embodiment, the guide assembly 2 has an axial direction, and the clamping jaw assemblies 1 move along the axial direction of the guide assembly 2 under the guidance of the guide assembly 2.

The driving assembly 3 is an assembly used to drive the clamping jaw assemblies 1 to move on the guide assembly 2. The driving assembly 3 is connected to the two clamping jaw assemblies 1 in a transmission manner, and the driving assembly 3 is used to drive the two clamping jaw assemblies 1 to move toward each other or move away from each other to a target position. Specifically, when the two clamping jaw assemblies 1 move toward each other to the target position, the distance between the two clamping jaw assemblies 1 becomes smaller, and the two clamping jaw assemblies 1 are used to clamp on a small-sized wheel hub. When the two clamping jaw assemblies 1 move away from each other to the target position, the distance between the two clamping jaw assemblies 1 becomes larger, and the two clamping jaw assemblies 1 are used to clamp on a large-sized wheel hub.

The fixing assembly 4 refers to an assembly for fixing the auxiliary calibration tool; the fixing assembly 4 is arranged on the guide assembly 2, and the fixing assembly 4 is located between the two clamping jaw assemblies 1, so that the position of the fixing assembly 4 relative to the guide assembly 2 is fixed, and at the same time, it does not affect the movement of the guide assembly 2 toward or away from each other.

The working principle of the wheel hub clamping apparatus provided in embodiments are as follows:

The distance between the two clamping jaw assemblies 1 is adjusted according to the size of the wheel hub to be clamped. Specifically, the two clamping jaw assemblies 1 are driven to move toward or away from each other by the driving assembly 3, so that the distance between the two clamping jaw assemblies 1 can adapt to the size of the wheel hub, and then the two clamping jaw assemblies 1 are clamped on the wheel hub, and the fixing assembly 4 is arranged on the guide assembly 2 and is located between the two clamping jaw assemblies 1, that is, when the auxiliary calibration tool is arranged on the fixing assembly 4, it is located between the two clamping jaw assemblies 1. The detection apparatus obtains the information of the auxiliary calibration tool (such as image information) to analyze the positioning information of the tire.

By adopting the above technical solution, the driving assembly 3 can adjust the positions of the two clamping jaw assemblies 1 on the guide assembly 2 to enable the two clamping jaw assemblies 1 to clamp the wheel hub, the operation is convenient. In addition, the distance between the two clamping jaw assemblies 1 is adjustable, so that the wheel hub clamping apparatus can adapt to wheels of different sizes, thereby improving the applicability of the wheel hub clamping apparatus.

In an embodiment, the guide assembly 2 defines therein a guide cavity 21, the driving assembly 3 is arranged in the guide cavity 21, and the two clamping jaw assemblies 1 extend into the guide cavity 21 and are in transmission connection with the driving assembly 3.

Here, it can be understood that the guide assembly 2 is a hollow structure, the guide cavity 21 is provided therein with the guide assembly 2, and the driving assembly 3 is accommodated in the guide cavity 21, that is, the guide assembly 2 and the driving assembly 3 are integrated together, which improves the integration degree of the guide assembly 2 and the driving assembly 3, reduces the space occupied by the guide assembly 2 and the driving assembly 3, and reduces the volume of the wheel hub clamping apparatus.

By adopting the above technical solution, the guide assembly 2 and the driving assembly 3 are highly integrated, the occupied space and volume are reduced, and the wheel hub clamping apparatus is miniaturized.

In an embodiment, the guide assembly 2 comprises: a guide cylinder 22, and a guide cavity 21 defined in the guide cylinder 22. The driving assembly 3 comprises a threaded shaft 31, and the threaded shaft 31 is arranged through the guide cavity 21 and is in transmission connection with the two clamping jaw assemblies 1. The threaded shaft 31 is configured to drive the two clamping jaw assemblies 1 to move along an axial direction of the threaded shaft 31 when the threaded shaft 31 rotates around an axis of the threaded shaft 31.

Here, it can be understood that the guide cylinder 22 refers to an assembly for guiding the moving directions of the clamping jaw assemblies 1, and the guide cavity 21 is defined in the guide cylinder 22. The threaded shaft 31 refers to a shaft for driving the clamping jaw assemblies 1 to move. The threaded shaft 31 can rotate around its own axis, the threaded shaft 31 is arranged through the guide cavity 21, and the threaded shaft 31 is in transmission connection with the clamping jaw assemblies 1. When the threaded shaft 31 rotates around the axis thereof, the threaded shaft 31 can drive the clamping jaw assemblies 1 to move, and meanwhile, the clamping jaw assemblies 1 move along the axial direction of the threaded shaft 31 under the limit of the guide cylinder 22.

Specifically, two ends of the threaded shaft 31 are respectively provided with a first external thread 311 and a second external thread 312, the thread directions of the first external thread 311 and the second external thread 312 are opposite, and the two clamping jaw assemblies 1 are respectively matched with the first external thread 311 and the second external thread 312, so that when the threaded shaft 31 rotates, the two clamping jaw assemblies 1 move toward or away from each other along the axial direction of the threaded shaft 31.

By adopting the above technical solution, the rotation of the threaded shaft 31 around the axis can drive the clamping jaw assemblies 1 to move along the axial direction of the threaded shaft 31, that is, the threaded shaft 31 is connected to the clamping jaw assemblies 1 by a threaded manner, which has high transmission reliability and improves the adjustment flexibility.

In an embodiment, the driving assembly 3 further comprises a knob 32 connected to the threaded shaft 31, and the knob 32 is arranged on the guide assembly 2. The knob 32 is configured to drive the threaded shaft 31 to rotate around the axis thereof, and the threaded shaft 31 drives the clamping jaw assemblies 1 to move along the axial direction of the threaded shaft 31.

Here, it can be understood that the knob 32 refers to a component used to drive the threaded shaft 31 to rotate. The knob 32 is arranged on the guide assembly 2, specifically, the knob 32 is provided on the top of the guide cylinder 22, the knob 32 is connected to the threaded shaft 31 and can drive the threaded shaft 31 to rotate around the axis.

By adopting the above technical solution, it is convenient for the operator to manually adjust the positions of the clamping jaw assemblies 1 on the guide assembly 2.

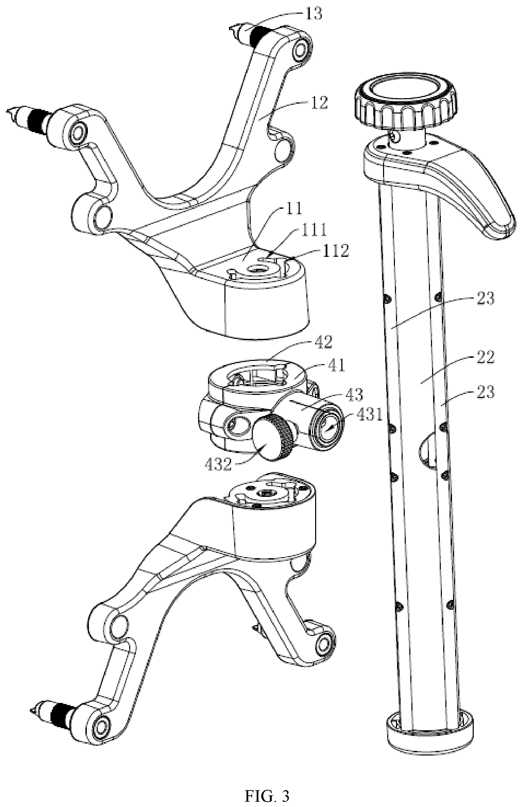

Referring to FIG. 3, in an embodiment, the guide assembly 2 further comprises a guide structure 23 arranged on an outer wall of the guide cylinder 22, a length direction of the guide structure 23 is parallel to an axial direction of the guide cylinder 22, the guide cylinder 22 and the guide structure 23 are both in slidable connection with the two clamping jaw assemblies 1, and the guide structure 23 is configured to limit rotation of the two clamping jaw assemblies 1 around an axis of the guide cylinder 22.

Here, it can be understood that the guide structure 23 refers to a structure for guiding the moving directions of the clamping jaw assemblies 1. The guide structure 23 is arranged on the outer wall of the guide cylinder 22, and the length direction of the guide structure 23 is parallel to the axial direction of the guide cylinder 22, so that the guide structure 23 guides the clamping jaw assemblies 1 to move along the axial direction of the guide cylinder 22. In addition, the guide structure 23 limits the rotation of the clamping jaw assembly 1 around the axis of the guide cylinder 22.

Optionally, a plurality of guide structures 23 are provided, and the plurality of guide structures 23 are arranged on the outer wall of the guide cylinder 22 in parallel and at intervals, and the plurality of guide structures 23 jointly limit the rotation of the clamping jaw assemblies 1 around the axis of the guide cylinder 22. Preferably, three guide structures 23 are provided, and three guide structures 23 are arranged on the outer wall of the guide cylinder 22 in parallel and at intervals.

Specifically, the guide structure 23 is a guide bar convexly arranged on the outer wall of the guide cylinder 22, and the protruding direction of the guide bar is perpendicular to the axial direction of the guide cylinder 22. Or alternatively, the guide structure 23 is a guide groove concavely arranged on the outer wall of the guide cylinder 22, and the concave direction of the guide groove is perpendicular to the axial direction of the guide cylinder 22.

Here, it can be understood that when the guide structure 23 is a guide bar, the clamping jaw assemblies 1 are respectively provided with guide grooves corresponding to the guide bar, and the guide bar matches with the respective guide grooves in a concave-convex clearance manner, so that the guide bar limits the movement of the guide grooves. When the guide structure 23 is a guide groove, the clamping jaw assemblies 1 are provided with guide bars corresponding to the guide groove, and the respective guide bars match with the guide groove in a concave-convex clearance manner, so that the guide bar limits the movement of the guide grooves.

By adopting the above technical solution, the guiding function of the guide structure 23 is realized.

In an embodiment, the guide assembly 2 further comprises a scale structure arranged on an outer wall of the guide cylinder 22, and the scale structure is used to calibrate positions of the two clamping jaw assemblies 1 on the guide assembly 2.

Here, it can be understood that the scale structure refers to a mark indicating the size of the value on the outer wall of the guide cylinder 22. When the clamping jaw assemblies 1 move on the guide assembly 2, the scale structure can indicate whether the clamping jaw assemblies 1 have reached the target positions.

Specifically, the scale structure is arranged in sequence along the length direction of the guide cylinder.

By adopting the above technical solution, the convenience of using the wheel hub clamping apparatus is improved.

In an embodiment, each of the two clamping jaw assemblies 1 comprises: a slide part 11, a connecting part 12, and a clamping jaw part 13. The slide part 11 is sleeved on the threaded shaft 31. An inner wall of the slide part 11 is provided with an internal thread matching with the threaded shaft 31. The connecting part 12 is in connection with the slide part 11. The slide part 11 defines therein a first guide groove 111 which slidably matches with the guide cylinder 22. The clamping jaw part 13 is provided at one end of the connecting part 12 away from the slide part 11 and is used to be fixed on the wheel hub.

Here, it can be understood that the slide part 11 refers to a part configured to be in sliding connection with the guide assembly 2; the wheel hub clamping apparatus comprises the guide assembly 2, and the slide part 11 is in slidable connection with the guide assembly 2, that is, the slide part 11 can move relative to the guide assembly 2 on the guide assembly 2. Optionally, the slide part 11 can move along the length direction of the guide assembly 2.

The connecting part 12 refers to a part configured to connect the slide part 11 and the clamping jaw part 13. The connecting part 12 is in connection with the slide part 11 and the clamping jaw part 13, so that the clamping jaw part 13 is fixed relative to the slide part 11.

The clamping jaw part 13 refers to a part configured to be fixed on the wheel hub. The clamping jaw part 13 enables the wheel hub clamping apparatus to be fixed on the wheel hub in a clamping manner, and the clamping jaw part 13 is configured to provide a force point for the wheel hub clamping apparatus to be arranged on the wheel hub.

The slide part 11 is sleeved on the threaded shaft 31, and the slide part 11 is provided with an internal thread, which is provided on the inner wall of the slide part 11, and the internal thread is used to cooperate with the threaded shaft 31, so that the slide part 11 can be driven to move when the threaded shaft 31 rotates. The slide part 11 is also provided with the first guide groove 111, and the shape and size of the first guide groove 111 match the shape and size of the guide cylinder 22, so that the slide part 11 can be sleeved on the guide cylinder 22, and can match with the guide cylinder 22 in a clearance manner, and the slide part 11 can slide along the axial direction of the guide cylinder 22.

Specifically, the two ends of the threaded shaft 31 are respectively provided with a first external thread 311 and a second external thread 312, the thread directions of the first external thread 311 and the second external thread 312 are opposite, and the slide parts 11 of the two clamping jaw assemblies 1 are respectively provided with a first internal thread and a second internal thread. The first internal thread cooperates with the first external thread 311, and the second internal thread cooperates with the second external thread 312, so that when the threaded shaft 31 rotates, the two clamping jaw assemblies 1 move toward or away from each other along the axial direction of the threaded shaft 31.

By adopting the above technical solution, the smoothness of the movements of the clamping jaw assemblies 1 on the guide assembly 2 is improved.

In an embodiment, the slide part 11 further defines therein a second guide groove 112 communicating with the first guide groove 111, and the second guide groove 112 slidably matches with the guide structure 23.

Here, it can be understood that the second guide groove 112 is used to slidably match with the guide structure 23, ensuring that when the slide part 11 moves along the axial direction of the guide cylinder 22, the clamping jaw assemblies 1 will not rotate around the axis of the guide cylinder 22

By adopting the above technical solution, it is realized that the guide structure 23 restricts the rotation of the clamping jaw assemblies 1 around the axis of the guide cylinder 22.

In an embodiment, the fixing assembly 4 comprises a first clamping part 41 and a second clamping part 42 fastened to the first clamping part 41, and the first clamping part 41 and the second clamping part 42 are clamped and fixed on the guide assembly 2 under an action of a fastening force.

Here, it can be understood that the first clamping part 41 and the second clamping part 42 are detachably connected by a fastener, and the first clamping part 41 and the second clamping part 42 are clamped and fixed on the guide assembly 2 under the action of the fastening force provided by the fastener. Specifically, the first clamping part 41 and the second clamping part 42 are clamped on the guide cylinder 22.

By adopting the above technical solution, it is convenient to disassemble and assemble the fixing assembly 4 on the guide assembly 2.

In an embodiment, the fixing assembly 4 further comprises a fixing part 43 arranged at the first clamping part 41 for detachably connecting with the auxiliary calibration tool, the fixing part 43 defines therein a fixing hole 431, and the fixing part 43 is further provided with a fastener 432 configured to extend into the fixing hole 431 for fastening the auxiliary calibration tool.

Here, it can be understood that the auxiliary calibration tool is detachably fixed in the fixing hole 431 by the fastener 432.

By adopting the above technical solution, the auxiliary calibration tool is detachably fixed on the fixing assembly 4, which is convenient for the disassembly and assembly of the auxiliary calibration tool.

In a second aspect, a detection device is provided, comprising an auxiliary calibration tool and the above-mentioned wheel hub clamping apparatus, the wheel hub clamping apparatus is configured to fix the auxiliary calibration tool, and the detection device is used to obtain an image of the auxiliary calibration tool.

By adopting the above technical solution, on the basis of having the advantages of the wheel hub clamping apparatus of the above-mentioned embodiments, the detection device of embodiments of the present application also has the advantage of easy operation.

The above are only preferred embodiments of the present application and are not intended to limit the present application.

## Claims

1. A wheel hub clamping apparatus, comprising:
two clamping jaw assemblies, which are configured to clamp on a wheel hub;
a guide assembly, which is slidably connected with the two clamping jaw assemblies to enable the two clamping jaw assemblies to move relative to the guide assembly;
a driving assembly, which is in transmission connection with the two clamping jaw assemblies and is used to drive the two clamping jaw assemblies to move toward or away from each other on the guide assembly to reach target positions; and
a fixing assembly, which is arranged on the guide assembly and is located between the two clamping jaw assemblies, and is used to fix an auxiliary calibration tool.

2. The wheel hub clamping apparatus according to claim 1, wherein
the guide assembly defines therein a guide cavity, the driving assembly is arranged in the guide cavity, and the two clamping jaw assemblies extend into the guide cavity and are in transmission connection with the driving assembly.

3. The wheel hub clamping apparatus according to claim 2, wherein
the guide assembly comprises: a guide cylinder, and a guide cavity defined in the guide cylinder;
the driving assembly comprises a threaded shaft, and the threaded shaft is arranged through the guide cavity and is in transmission connection with the two clamping jaw assemblies; and
the threaded shaft is configured to drive the two clamping jaw assemblies to move along an axial direction of the threaded shaft when the threaded shaft rotates around an axis of the threaded shaft.

4. The wheel hub clamping apparatus according to claim 3, wherein
the guide assembly further comprises a guide structure arranged on an outer wall of the guide cylinder, a length direction of the guide structure is parallel to an axial direction of the guide cylinder, the guide cylinder and the guide structure are both in slidable connection with the two clamping jaw assemblies, and the guide structure is configured to limit rotation of the two clamping jaw assemblies around an axis of the guide cylinder.

5. The wheel hub clamping apparatus according to claim 3, wherein
the guide assembly further comprises a scale structure arranged on an outer wall of the guide cylinder, and the scale structure is configured to calibrate positions of the two clamping jaw assemblies on the guide assembly.

6. The wheel hub clamping apparatus according to claim 3, wherein
each of the two clamping jaw assemblies comprises: a slide part, a connecting part, and a clamping jaw part;
the slide part is sleeved on the threaded shaft, and an inner wall of the slide part is provided with an internal thread matching with the threaded shaft;
the connecting part is in connection with the slide part;
the slide part defines therein a first guide groove which slidably matches with the guide cylinder; and
the clamping jaw part is provided at one end of the connecting part away from the slide part and is used to be fixed on the wheel hub.

7. The wheel hub clamping apparatus according to claim 6, wherein the slide part further defines therein a second guide groove communicating with the first guide groove, and the second guide groove slidably matches with the guide structure.

8. The wheel hub clamping apparatus according to any one of claims 1 to 7, wherein
the fixing assembly comprises a first clamping part and a second clamping part fastened to the first clamping part, and the first clamping part and the second clamping part are clamped and fixed on the guide assembly under an action of a fastening force.

9. The wheel hub clamping apparatus according to claim 8, wherein
the fixing assembly further comprises a fixing part arranged at the first clamping part for detachably connecting with the auxiliary calibration tool, the fixing part defines therein a fixing hole, and the fixing part is further provided with a fastener configured to extend into the fixing hole for fastening the auxiliary calibration tool.

10. A detection device, comprising an auxiliary calibration tool and the wheel hub clamping apparatus according to any one of claims 1-9, wherein the wheel hub clamping apparatus is configured to fix the auxiliary calibration tool.

## Amended claims

### Amended claims in accordance with Rule 137(2) EPC.

1. A wheel hub clamping apparatus, comprising:
two clamping jaw assemblies (1), which are configured to clamp on a wheel hub;
a guide assembly (2), which is slidably connected with the two clamping jaw assemblies (1) to enable the two clamping jaw assemblies (1) to move relative to the guide assembly (2);
a driving assembly (3), which is in transmission connection with the two clamping jaw assemblies (1) and is used to drive the two clamping jaw assemblies (1) to move toward or away from each other on the guide assembly (2) to reach target positions; and
a fixing assembly (4), which is arranged on the guide assembly (2) and is located between the two clamping jaw assemblies (1), and is used to fix an auxiliary calibration tool;
wherein the guide assembly (2) defines therein a guide cavity (21), the driving assembly (3) is arranged in the guide cavity (21), and the two clamping jaw assemblies (1) extend into the guide cavity (21) and are in transmission connection with the driving assembly (3);wherein the guide assembly (2) comprises: a guide cylinder (22), and a guide cavity (21) defined in the guide cylinder (22); the driving assembly (3) comprises a threaded shaft (31), and the threaded shaft (31) is arranged through the guide cavity (21) and is in transmission connection with the two clamping jaw assemblies (1); and the threaded shaft (31) is configured to drive the two clamping jaw assemblies (1) to move along an axial direction of the threaded shaft (31) when the threaded shaft (31) rotates around an axis of the threaded shaft (31);
**characterized in that**
the guide assembly (2) further comprises a guide structure (23) arranged on an outer wall of the guide cylinder (22), a length direction of the guide structure (23) is parallel to an axial direction of the guide cylinder (22), the guide cylinder (22) and the guide structure (23) are both in slidable connection with the two clamping jaw assemblies (1), and the guide structure (23) is configured to limit rotation of the two clamping jaw assemblies (1) around an axis of the guide cylinder (22).

2. The wheel hub clamping apparatus according to claim 1, wherein
the guide assembly (2) further comprises a scale structure arranged on an outer wall of the guide cylinder (22), and the scale structure is configured to calibrate positions of the two clamping jaw assemblies (1) on the guide assembly (2).

3. The wheel hub clamping apparatus according to claim 1, wherein
each of the two clamping jaw assemblies (1) comprises: a slide part (11), a connecting part (12), and a clamping jaw part (13);
the slide part (11) is sleeved on the threaded shaft (31), and an inner wall of the slide part (11) is provided with an internal thread matching with the threaded shaft (31);
the connecting part (12) is in connection with the slide part (11);
the slide part (11) defines therein a first guide groove (111) which slidably matches with the guide cylinder (22); and
the clamping jaw part (13) is provided at one end of the connecting part (12) away from the slide part (11) and is used to be fixed on the wheel hub.

4. The wheel hub clamping apparatus according to claim 3, wherein the slide part (11) further defines therein a second guide groove (112) communicating with the first guide groove (111), and the second guide groove (112) slidably matches with the guide structure (23).

5. The wheel hub clamping apparatus according to any one of claims 1 to 4, wherein
the fixing assembly (4) comprises a first clamping part (41) and a second clamping part (42) fastened to the first clamping part (41), and the first clamping part (41) and the second clamping part (42) are clamped and fixed on the guide assembly (2) under an action of a fastening force.

6. The wheel hub clamping apparatus according to claim 5, wherein
the fixing assembly (4) further comprises a fixing part (43) arranged at the first clamping part (41) for detachably connecting with the auxiliary calibration tool, the fixing part (43) defines therein a fixing hole (431), and the fixing part (43) is further provided with a fastener (432) configured to extend into the fixing hole (431) for fastening the auxiliary calibration tool.

7. A detection device, comprising an auxiliary calibration tool and the wheel hub clamping apparatus according to any one of claims 1-6, wherein the wheel hub clamping apparatus is configured to fix the auxiliary calibration tool.
